(19) Europäisches Patentamt
European Patent Office
Office européen des brevets

(11) EP 3 732 456 B1

(12) EUROPÄISCHE PATENTSCHRIFT

(45) Veröffentlichungstag und Bekanntmachung des Hinweises auf die Patenterteilung:
09.03.2022 Patentblatt 2022/10

(21) Anmeldenummer: 18830867.0

(22) Anmeldetag: 28.12.2018

(51) Internationale Patentklassifikation (IPC):
G01M 13/026 (2019.01)        G01M 15/04 (2006.01)
G01L 3/02 (2006.01)          G01L 25/00 (2006.01)

(52) Gemeinsame Patentklassifikation (CPC):
G01M 13/026; G01L 3/02; G01L 25/003;
G01M 15/046; F02D 2200/1004

(86) Internationale Anmeldenummer:
PCT/EP2018/097066

(87) Internationale Veröffentlichungsnummer:
WO 2019/129837 (04.07.2019 Gazette 2019/27)

(54) **VERFAHREN ZUM SCHÄTZEN EINES INNEREN EFFEKTIVEN DREHMOMENTS EINES DREHMOMENTENERZEUGERS**

METHOD FOR ESTIMATING AN INTERNAL EFFECTIVE TORQUE OF A TORQUE GENERATOR

PROCÉDÉ POUR L'ESTIMATION D'UN COUPLE EFFECTIF INTERNE D'UN GÉNÉRATEUR DE COUPLE

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 29.12.2017 AT 510872017

(43) Veröffentlichungstag der Anmeldung:
04.11.2020 Patentblatt 2020/45

(73) Patentinhaber: AVL List GmbH
8020 Graz (AT)

(72) Erfinder:
• VADAMALU, Raja Sangili
64287 Darmstadt (DE)
• BEIDL, Christian
8063 Eggersdorf (AT)
• BIER, Maximilian
64285 Darmstadt (DE)

(74) Vertreter: Patentanwälte Pinter & Weiss OG
Prinz-Eugen-Straße 70
1040 Wien (AT)

(56) Entgegenhaltungen:
FR-A1- 3 022 601

• JING NA ET AL: "Vehicle Engine Torque Estimation via Unknown Input Observer and Adaptive Parameter Estimation", IEEE TRANSACTIONS ON VEHICULAR TECHNOLOGY., Bd. 67, Nr. 1, 14. August 2017 (2017-08-14), Seiten 409-422, XP055577811, US ISSN: 0018-9545, DOI: 10.1109/TVT.2017.2737440 in der Anmeldung erwähnt
• CHANG JEANG-LIN: "Discrete-time PID observer design for state and unknown input estimations in noisy measurements", INTERNATIONAL JOURNAL OF CONTROL, AUTOMATION AND SYSTEMS, KOREAN INSTITUTE OF ELECTRICAL ENGINEERS, SEOUL, KR, Bd. 13, Nr. 4, 23. Mai 2015 (2015-05-23), Seiten 816-822, XP035527337, ISSN: 1598-6446, DOI: 10.1007/S12555-014-0151-Z [gefunden am 2015-05-23]

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 732 456 B1

## EP 3 732 456 B1

**Beschreibung**

Verfahren zum Bereitstellen eines Schätzwertes eines inneren effektiven Drehmoments eines Drehmomentenerzeugers, der über ein Koppelungselement mit einer Drehmomentensenke verbunden wird und das sich ergebende

$$\dot{x} = Ax + Bu + Fw$$

lineare dynamische System in Zustands-raumdarstellung in der Form $y = Cx$ oder das sich ergebende

$$\dot{x} = Ax + Bu + Mf(x) + Fw$$

nichtlineare dynamische System in Zustandsraumdarstellung in der Form $y = Cx$ verwendet wird, worin die Matrizen A, B, C, F, M Systemmatrizen sind, die sich aus einem Modell des dynamischen Systems, das das effektive Drehmoment enthält, ergeben und worin u ein Eingangsvektor, y ein Ausgangsvektor und x ein Zustandsvektor des dynamischen Systems ist und w das effektive Drehmoment als unbekannten Eingang bezeichnet. Die Erfindung betrifft ferner einen Prüfstand zum Durchführen eines Prüflaufs für einen Prüfling mit einem ein Regler, um den Drehmomentenerzeuger oder die Drehmomentensenke zu regeln, und der Regler ein inneres effektives Drehmoment des Drehmomentenerzeugers verarbeitet, das mit einem Verfahren zum Bereitstellen eines Schätzwertes des effektiven Drehmoments geschätzt wird.

Für einen Verbrennungsmotor ist das effektive Drehmoment, also das Drehmoment, das für die Beschleunigung der Massenträgheit des Verbrennungsmotors und allfälliger damit verbundener Komponenten (Antriebsstrang, Fahrzeug) sorgt, eine wichtige Größe. Leider ist dieses innere effektive Drehmoment ohne großen messtechnischen Aufwand nicht direkt messbar.

Insbesondere auf Prüfständen oder in Fahrzeugprototypen auf der Straße wird häufig mit Indiziermesstechnik das indizierte Verbrennungsmoment gemessen. Das beruht auf der Messung des Zylinderdruckes in den Zylindern des Verbrennungsmotors. Das ist zum einen messtechnisch aufwendig und kostspielig und wird daher nur am Prüfstand oder in einem Fahrzeugprototypen auf der Straße angewendet. Aber selbst wenn das indizierte Verbrennungsmoment gemessen wird, hat man damit noch immer nicht das effektive Drehmoment des Verbrennungsmotors, das sich ergibt, wenn man ein Reibmoment und sonstige Verlustmomente des Verbrennungsmotors vom indizierten Verbrennungsmoment abzieht. Das Reibmoment oder ein Verlustmoment ist in der Regel nicht bekannt und darüber hinaus natürlich in hohem Grade abhängig vom Betriebszustand (Drehzahl, Drehmoment, Temperatur, usw.), aber auch vom Alterungszustand und Belastungsgrad des Verbrennungsmotors.

Ein ähnliches Problem kann sich auch bei anderen Drehmomentenerzeugern, wie beispielsweise einem Elektromotor, ergeben, wo das innere effektive Drehmoment unter Umständen nicht direkt gemessen werden kann. Im Falle des Elektromotors wäre das innere effektive Drehmoment beispielsweise das Luftspaltmoment, das einer direkten Messung, ohne auf Signale des Umrichters zurückgreifen zu müssen, nicht zugänglich ist.

Das Problem des hohen apparativen Aufwands zur Ermittlung des indizierten Verbrennungsmoments wurde bereits dadurch gelöst, dass dieses Verbrennungsmoment mit einem Beobachter aus anderen messbaren Größen geschätzt wird. In der US 5,771,482 A werden beispielsweise Messgrößen der Kurbelwelle zum Schätzen des Verbrennungsmoments verwendet. Das bedingt aber natürlich wiederum entsprechende Messtechnik an der Kurbelwelle, die aber in der Regel von vornherein nicht vorhanden ist. Auch in der US 6,866,024 B2 werden Messgrößen an der Kurbelwelle verwendet, um ein indiziertes Verbrennungsmoment zu schätzen. Darin werden Methoden der statistischen Signalverarbeitung (Stochastic Analysis Method und Frequency Analysis Technique) angewendet. Beide Ansätze führen aber nicht zum effektiven Drehmoment.

Es sind auch andere, auf Kalman Filter beruhende Beobachter bekannt geworden, die das induzierte Verbrennungsmoment schätzen. Ein Beispiel hierfür ist S. Jakubek, et al., "Schätzung des inneren Drehmoments von Verbrennungsmotoren durch parametrische Kalmanfilterung", Automatisierungstechnik 57 (2009) 8, S.395-402. Kalman Filter sind in der Regel rechentechnisch aufwendig und daher für einen praxistauglichen Einsatz nur bedingt verwendbar.

Aus Jing Na, et al., "Vehicle Engine Torque Estimation via Unknown Input Observer and Adaptive Parameter Estimation", IEEE Transactions on Vehicular Technology, Volume: PP, Issue: 99, 14.8.2017 ist ein Beobachter für das effektive Drehmoment eines Verbrennungsmotors bekannt. Dieser Beobachter ist als High-Gain Observer mit dem effektiven Drehmoment als unbekannten Eingang ausgeführt. Der Beobachter basiert auf gefilterten (Tiefpass) Messungen der Drehzahl und des Drehmoments an der Kurbelwelle des Verbrennungsmotors und der Beobachter schätzt ein gefiltertes effektives Drehmoment, also einen Mittelwert des effektiven Drehmoments des Verbrennungsmotors. Ein High-Gain Observer beruht darauf, dass durch die hohe Verstärkung nichtlineare Effekte, die durch die nichtlineare Modellierung des Prüfaufbaus entstehen, unterdrückt bzw. in den Hintergrund gedrängt werden. Der nichtlineare Ansatz macht dieses Konzept schwieriger. Zusätzlich geht durch das Filtern der Messungen natürlich auch viel Information im Messsignal verloren. Beispielsweise können damit Effekte wie Drehmomentenschwingungen aufgrund von Verbrennungsstößen in einem Verbrennungsmotor oder Schwingungen aufgrund des Schaltens in einem Umrichter eines Elektromotors im geschätzten effektiven Drehmoment nicht abgebildet werden.

Es ist eine Aufgabe der gegenständlichen Erfindung einen Beobachter für das innere effektive Drehmoment eines Drehmomentenerzeugers anzugeben, der auch ungefilterte und ver-AV-3966 WO rauschte Messsignale verarbeiten kann und der damit in der Lage ist, auch Schwingungseffekte im geschätzten effektiven Drehmoment abzubilden.

Diese Aufgabe wird gemäß dem Verfahren des unabhängigen Anspruchs 1 und dem Prüfstand des unabhängigen Anspruchs 11 dadurch erreicht, dass für dieses dynamische System ein Beobachter mit Beobachtermatrizen und mit unbekanntem Eingang entworfen wird, und der Beobachter zumindest ein verrauschtes Messsignal des Eingangsvektors und/oder des Ausgangsvektors erhält und der daraus eine Schätzung des Zustandsvektors und eine Schätzung des effektiven Drehmoments als unbekannten Eingang ermittelt, indem die Dynamik eines Beobachterfehlers als Differenz des Zustandsvektor und des geschätzten Zustandsvektor nur vom Beobachterfehler abhängig gemacht wird und die Matrix, die die Dynamik des Beobachterfehlers gemäß $\dot{e}=Ne$ oder $\dot{e}=Ze$ bestimmt, ausgelegt wird, sodass die Eigenwerte dieser Matrix in einem Bereich $f2/5 > \lambda > 5\cdot f1$ liegen, worin $f1$ die maximal zu erwartende Änderungsfrequenz des zumindest einen Messsignals ist und das Rauschen im zumindest einen Messsignal das Frequenzband größer der Frequenz $f2$ beeinflusst. Auf diese Weise kann Rauschen und nützliche Schwingungsinformation im Messsignal im Beobachter getrennt werden. Der Beobachter ist damit unempfindlich gegen Rauschen im Messsignal und kann Schwingungseffekte im effektiven Drehmoment abbilden. Beim erfindungsgemäßen Ansatz wird das dynamische System zusätzlich als lineares System modelliert, das einfacher zu beherrschen ist, weil erkannt wurde, dass viele Anwendungen, beispielsweise ein Prüfstand, als lineares System angesehen werden können.

Als weitere Bedingung für die Eigenwerte des Beobachters können die komplexen Eigenwerte in einem Koordinatensystem mit einer imaginären Achse als Ordinate und einer reelle Ache als Abszisse betrachtet werden und ein Dämpfungswinkel zwischen der imaginären Achse und einer Gerade durch einen Eigenwert und dem Ursprung des Koordinatensystems geprüft werden, sodass der Dämpfungswinkel für den Eigenwert, der der imaginären Achse am nächsten ist, im Bereich von $\pi/4$ und $3\cdot\pi/4$ liegt.

Um eventuell vorhandenes Rauschen im Schätzwert des effektiven Drehmoment zu entfernen und/oder um harmonische Schwingungsanteile im Schätzwerte zu entfernen, kann der mit dem Beobachter geschätzte Schätzwert des effektiven Drehmoment einem Filter zugeführt werden, in dem das geschätzte effektive Drehmoment in einem Tiefpassfilter mit einer vorgegebenen Grenzfrequenz größer einer Grundfrequenz tiefpassgefiltert wird, und in dem in zumindest einem selbstadaptiven Harmonikfilter ein harmonischer Schwingungsanteil des geschätzten effektiven Drehmoments als n-faches der Grundfrequenz ermittelt wird und der zumindest eine harmonische Schwingungsanteil zum tiefpassgefilterten geschätzten Drehmoment addiert wird und die entstehende Summe vom vom Beobachter gelieferten geschätzten Drehmoment abgezogen wird und die entstehende Differenz als Eingang in das Tiefpassfilter verwendet wird und der Ausgang des Tiefpassfilter als gefiltertes geschätztes effektives Drehmoment ausgegeben wird. In manchen Anwendungen wird ein gefilterter Schätzwert des effektiven Drehmoments benötigt, der mit einem solchen Filter bereitgestellt werden kann. Dabei ist das Filter in der Lage sich selbsttätig auf sich ändernde Grundfrequenzen im Schätzwert einzustellen. Diese Vorgehensweise ermöglicht ein einfaches Ausfiltern von allfälligem Rauschen im Schätzwert. Nachdem die Summe des tiefpassgefilterten Schätzwertes und eines harmonischen Schwingungsanteils vom Schätzwert abgezogen wird, erhält das Tiefpassfilter ein Signal am Eingang, in dem der harmonische Schwingungsanteil fehlt. Dieser Schwingungsanteil fehlt damit natürlich auch im gefilterten Ausgangssignal des Filters, womit sowohl Rauschen, als auch harmonische Oberwellen auf einfache Weise ausgefiltert werden können. Dabei können natürlich beliebige harmonische Schwingungsanteile ausgefiltert werden. Nachdem sich das Harmonikfilter an die veränderliche Grundfrequenz anpasst, folgt das Filter automatisch einer sich verändernden Grundfrequenz.

Das zumindest eine Harmonikfilter wird vorteilhafter Weise als orthogonales System implementiert, das eine d-Komponente und eine q-Komponente des Schätzwertes verwendet, wobei die d-Komponenten in Phase mit dem Messsignal ist und die q-Komponenten zur d-Komponente um 90° phasenverschoben ist, eine erste Übertragungsfunktion zwischen dem Eingang in das Harmonikfilter und der d-Komponente und eine zweite Übertragungsfunktion zwischen dem Eingang in das Harmonikfilter und der q-Komponente aufgestellt wird und Verstärkungsfaktoren der Übertragungsfunktionen als Funktion der harmonischen Frequenz ermittelt werden. Verändert sich die Frequenz, verändern sich automatisch auch die Verstärkungsfaktoren der Übertragungsfunktionen und das Harmonikfilter wird der Frequenz nachgeführt. Dabei wird vorzugsweise die d-Komponente als harmonischer Schwingungsanteil ausgegeben.

In einer besonders vorteilhaften Ausgestaltung wird der vom Tiefpassfilter ausgegebene tiefpassgefilterte Schätzwert im zumindest einen Harmonikfilter verwendet, um daraus die aktuelle Grundfrequenz zu ermitteln. Damit kann sich das Filter vollkommen selbsttätig auf eine veränderliche Grundfrequenz einstellen.

Wenn der Beobachter ein erstes und ein zweites Messsignal verarbeitet und der Schätzwert des effektiven Drehmoments mit einem ersten Filter gefiltert wird und das zweite Messsignal mit einem zweiten Filter gefiltert wird und das vom Tiefpassfilter des zweiten Filters ausgegebene tiefpassgefilterte zweite Messsignal im zumindest einen Harmonikfilter des ersten Filters verwendet wird, um daraus im ersten Filter die aktuelle Grundfrequenz zu ermitteln, können die beiden Filter auf einfache Weise synchronisiert werden.

Besonders vorteilhaft wird der Schätzwert des effektiven Drehmoment in einem Regler zum Regeln des Drehmomentenerzeugers und/oder der Drehmomentensenke verwendet. Dabei kann vorgesehen sein, dass die Realteile der Eigenwerte des Beobachters kleiner sind, als die Realteile der Eigenwerte des Reglers sind, womit sichergestellt werden kann, dass der Beobachter schneller ist als der Regel, womit der Regler immer aktuelle Schätzwerte des effektiven Drehmoments vorliegen hat.

Die gegenständliche Erfindung wird nachfolgend unter Bezugnahme auf die Figuren 1 bis 7 näher erläutert, die beispielhaft, schematisch und nicht einschränkend vorteilhafte Ausgestaltungen der Erfindung zeigen. Dabei zeigt

Fig.1 eine erfindungsgemäße Beobachterstruktur zum Schätzen des effektiven Drehmoment,
Fig.2 ein Prüfaufbau mit Drehmomentenerzeuger und Drehmomentensenke auf einem Prüfstand,
Fig.3 ein physikalisches Modell des Prüfaufbaus,
Fig.4 die Struktur eines erfindungsgemäßen Filters,
Fig.5 die Struktur eine Harmonikfilters des erfindungsgemäßen Filters,
Fig.6 eine mögliche Kombination des Beobachters und des Filters und
Fig.7 die Verwendung des Beobachters und Filters auf einem Prüfstand.

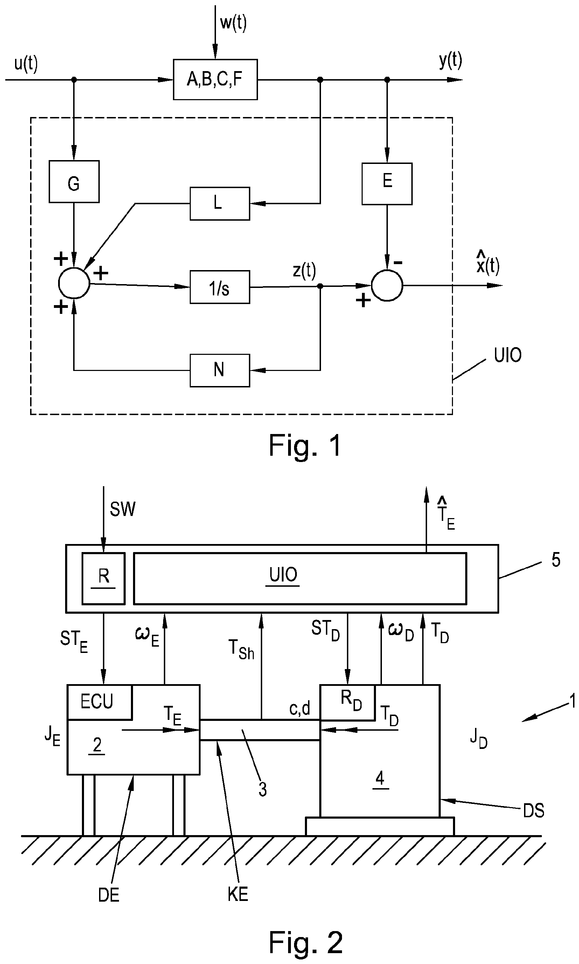

Die Erfindung geht von einem dynamischen technischen System mit einem Drehmomentenerzeuger DE, beispielsweise ein Verbrennungsmotor 2 oder ein Elektromotor oder eine Kombination davon, und einer damit verbundenen Drehmomentensenke DS aus, wie beispielhaft in Fig.2 dargestellt. Die Drehmomentensenke DS ist die Last für den Drehmomentenerzeuger DE. Auf einem Prüfstand 1 (z.B. Fig.2) für den Drehmomentenerzeuger DE ist die Drehmomentensenke DS eine Belastungsmaschine 4. In einem Fahrzeug mit dem Drehmomentenerzeuger DE wäre die Drehmomentensenke DS praktisch der Widerstand der vom gesamten Fahrzeug hervorgerufen wird. Die Drehmomentensenke DS ist natürlich mechanisch über ein Koppelungselement KE, beispielsweise eine Verbindungswelle 3, mit dem Drehmomentenerzeuger DE gekoppelt, um ein Drehmoment vom Drehmomentenerzeuger DE auf die Drehmomentensenke DS übertragen zu können. Der Drehmomentenerzeuger DE erzeugt ein inneres effektives Drehmoment $T_E$, das der Beschleunigung (auch negativ) der eigenen Massenträgheit $J_E$ und der Massenträgheit $J_D$ der verbundenen Drehmomentensenke DS dient. Dieses innere effektive Drehmoment $T_E$ des Drehmomentenerzeugers DE ist messtechnisch nicht, oder nur sehr aufwendig, zugänglich und soll erfindungsgemäß durch einen Beobachter UIO ermittelt, also geschätzt, werden.

Es wird von einer hinlänglich bekannten Zustandsraumdarstellung des technischen dynamischen Systems in der Form

$$\dot{x} = Ax + Bu + Fw$$

y=Cx

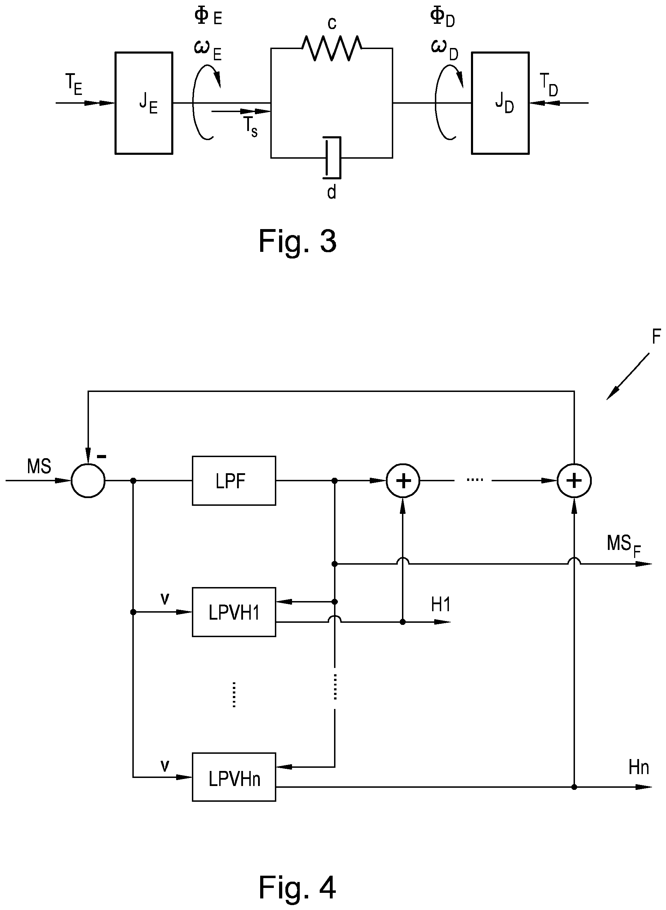

ausgegangen. Darin bezeichnet x den Zustandsvektor des technischen Systems, u den bekannten Eingangsvektor, y den Ausgangsvektor und w den unbekannten Eingang. A, B, F, C sind die Systemmatrizen, die sich aus der Modellierung des dynamischen Systems, beispielsweise durch Bewegungsgleichungen am Modell wie in Fig.3 dargestellt, ergeben. Beobachter mit unbekanntem Eingang (UIO) für solche dynamischen Systeme sind bekannt, beispielsweise aus Mohamed Darouach, et al., "Full-order observers for linear systems with unknown inputs", IEEE Transactions on Automatic Control, Institute of Electrical and Electronics Engineers, 1994, 39 (3), pp.606-609. Der Beobachter UIO ergibt sich definitionsgemäß zu

$$\dot{z} = Nz + Ly + Gu$$

$$\hat{x} = z - Ey$$

Die Beobachtermatrizen N, L, G, E der Beobachterstruktur (Fig.1) sind unbekannt und müssen bestimmt werden, sodass der geschätzte Zustand $\hat{x}$ gegen x konvergiert. z ist ein interner Zustand des Beobachters. Der Beobachter UIO schätzt damit die Zustandsgrößen x des dynamischen Systems und ermöglicht die Berechnung eines Schätzwertes für den unbekannten Eingang w als Funktion der Beobachtermatrizen N, L, G, E und der Systemmatrizen A, B, C, F und mit dem Eingangsvektor u und dem Ausgangsvektor y. Dazu wird der Beobachterfehler e eingeführt, mit e=$\hat{x}$-x=z-x-Ey. Die Dynamik des Beobachterfehlers e folgt dann mit den obigen Gleichungen zu

$$\dot{e} = Ne + (NM + LC + MA)x + (G - MB)u - MFw$$

4

mit

M = I+EC und der Einheitsmatrix I. Damit die Dynamik des Beobachterfehlers e unabhängig vom unbekannten Eingang w wird muss gelten ECF = -F und damit die Dynamik des Beobachterfehlers e unabhängig vom bekannten Eingang u wird muss gelten G = MB. Wenn zusätzlich die Dynamik des Beobachterfehlers e unabhängig vom Zustand x sein soll, ergibt sich weiters N = MA - KC und L = K(I + CE) - MAE. Damit reduziert sich die Dynamik des Beobachterfehlers e auf e = Ne. Die Gleichung ECF = -F kann noch in der Form

E = -F(CF)$^+$ + Y(I-(CF)(CF)$^+$) angeschrieben, worin die Matrix Y eine Designmatrix für den Beobachter UIO darstellt und ()$^+$ die linke Inverse der Matrix () darstellt. Wird für die Stabilität der Dynamik des Beobachterfehlers e ein Lyapunov-Kriterium verwendet ergibt sich mit einer symmetrischen positiven definiten Matrix P das Stabilitätskriterium N$^T$P+PN < 0. Wobei mit der Matrix P eine quadratische Lyapunov Funktion definiert wird.

Mit den Vereinfachungen U = -F(CF)$^+$, V = I - (CF)(CF)$^+$ und E = U + YV kann das Stabilitätskriterium umgeschrieben werden in der Form

$$((I+UC)A)^T P + P(I+UC)A + (VCA)^T \overline{Y}^T + \overline{Y}(VCA) - C^T \overline{K}^T - \overline{K}C < 0 \,.$$

Diese Ungleichung kann nach $\overline{Y}$, $\overline{K}$ aufgelöst werden, woraus Y, K als Y = P$^{-1}\overline{Y}$ und K = P$^{-1}\overline{K}$ berechnet werden können. Damit können die Matrizen N, L, G, E berechnet werden und eine asymptotische Stabilität sichergestellt werden.

Selbstverständlich könnte auch ein anderes Stabilitätskriterium verwendet werden, beispielsweise ein Nyquistkriterium. Am grundlegenden Vorgehen ändert das aber nichts, sondern lediglich an der Form der Ungleichung.

Die Berechnung der Matrizen N, L, G, E erfolgt derart, dass ein Gleichungslöser (Solver), der für solche Probleme verfügbar ist, versucht Matrizen N, L, G, E zu finden, die die angegebene Ungleichung erfüllen. Hierbei kann es mehrere gültige Lösungen geben.

Um den unbekannten Eingang w zu schätzen kann ein Störsignal h = Fw definiert werden. Damit folgt Ey = EC(Ax + Bu)- Fw . Das geschätzte Störsignal kann dann in der Form h = Ky - Eẏ - (KC - ECA)e + ECBu geschrieben werden und der Schätzfehler zu h-ĥ = -(KC-ECA)e.

Der Fehler in der Schätzung der Störgröße h und damit des unbekannten Einganges w ist folglich proportional zum Fehler e der Zustandsschätzung.

Eine Schätzung des unbekannten Eingangs w ergibt sich dann zu

$$\hat{w} = F^{-1}\hat{h} = F^{-1}\left(Ky - E\dot{y} - (KC - ECA)e + ECBu\right).$$

Der obige Beobachter UIO hat die Struktur wie in Fig.1 dargestellt. Ein wesentlicher Vorteil dieses Beobachters UIO liegt darin, dass die Messgrößen der Eingangsgrößen u(t) des Eingangsvektors u und der Ausgangsgrößen y(t) des Ausgangsvektors y nicht gefiltert werden müssen, sondern dass der Beobachter UIO die ungefilterten Messgrößen, die z.B. durch Messrauschen oder Systemrauschen durchaus stark verrauscht sein können, verarbeiten kann. Um das zu ermöglich, muss der Beobachter UIO in der Lage sein, Rauschen und den Frequenzgehalt eines Messsignals der gemessenen Messgröße zu trennen. Dazu ist der Beobachter UIO so zu entwerfen, dass die Dynamik des Beobachters UIO einerseits der zu erwartenden Dynamik des Messsignals folgen kann und andererseits das zu erwartende Rauschen nicht verstärkt. Das wird durch geeignete Wahl der Eigenwerte λ des Beobachters UIO erreicht. Mit Dynamik ist dabei eine Änderungsrate zu verstehen. Wenn mit f1 die maximal zu erwartende Änderungsfrequenz des Messsignals ist, dann soll die untere Grenze der Eigenwerte f des Beobachters UIO maximal fünfmal der Frequenz f1 gewählt werden. Die zu erwartende Änderungsfrequenz des Messsignals kann durch die Systemdynamik bestimmt sein, d.h., dass das dynamische System selbst nur bestimmte Änderungsraten in den gemessenen Messsignalen zulässt, oder durch das Messsignal selbst, d.h., dass die Dynamik des Messsignals systembedingt begrenzt ist, beispielswiese durch die Geschwindigkeit der Messtechnik oder durch vorgegebene Begrenzungen der Geschwindigkeit der Messtechnik. Wenn das Rauschen das Frequenzband größer der Frequenz f2 beeinflusst, dann soll die obere Grenze der Eigenwerte f des Beobachters UIO mit mindestens f2/5 gewählt werden. Für die Eigenwerte λ des Beobachters UIO ergibt sich demnach ein Bereich f2/5 > λ > 5·f1. Nachdem in der Regel immer hochfrequentes Rauschen auftritt, ist diese Trennung in der Regel immer möglich.

Wenn mehrere Messsignale im Beobachter UIO verarbeitet werden, wird das für alle Messsignale gemacht und das dynamischste (Messsignal mit der größten Änderungsrate) oder das am stärksten verrauschte Messsignal herangezogen.

Die Eigenwerte λ des obigen Beobachters UIO ergibt sich aus der die Dynamik des Beobachters UIO bestimmende Matrix N (aus e = Ne). Die Eigenwerte λ werden bekanntermaßen gemäß λ = det(sl - N) = 0 berechnet, mit der Einheitsmatrix I und der Determinante det.

Es können damit für die möglichen Lösungen für die Matrizen N, L, G, E diejenigen ausgeschieden werden, bei denen die Eigenwerte λ der Bedingung f2/5 > λ > 5·f1 nicht genügen. Die verbleibende Lösung definiert dann den Beobachter UIO. Bleiben dabei mehrere Lösungen über kann eine gewählt werden, oder weitere Bedingungen berücksichtigt werden.

Eine weitere Bedingung kann aus der Lage der Eigenwerte λ erhalten werden. Die Eigenwerte λ sind in der Regel konjugiert komplexe Paare und können in einem Koordinatensystem mit der imaginären Achse als Ordinate und der reellen Achse als Abszisse aufgetragen werden. Aus der Systemtheorie ist bekannt, dass aus Stabilitätsgründen die Eigenwerte λ alle links von der imaginären Achse platziert sein sollten. Wenn ein Dämpfungswinkel β eingeführt wird, der den Winkel zwischen der imaginären Achse und einer Gerade durch einen Eigenwert λ und dem Ursprung des Koordinatensystems bezeichnet, dann soll dieser Dämpfungswinkel β für den Eigenwert λ, der der imaginären Achse am nächsten ist, im Bereich von π/4 und 3·π/4 liegen. Das ist damit begründet, dass durch den Beobachter UIO natürliche Frequenzen des dynamischen Systems nicht, oder nur wenig, gedämpft werden sollen.

Wenn der Beobachter UIO in Kombination mit einem Regler R verwendet wird, wie weiter unten noch ausgeführt werden wird, dann ergibt sich daraus eine weitere Bedingung, dass die Eigenwerte A des Beobachters UIO bezogen auf die imaginäre Achse links von den Eigenwerten $\lambda_R$ des Reglers R liegen sollen, sodass der Beobachter UIO dynamischer (also schneller) als der Regler R ist. Die Realteile der Eigenwerte λ des Beobachters UIO sollen somit alle kleiner sein, als die Realteile der Eigenwerte $\lambda_R$ des Reglers R.

Bleiben auch mit den zusätzlichen Bedingungen noch mehrere Lösungen über, dann kann eine davon gewählt werden, beispielsweise eine Lösung mit möglichst großem Abstand zwischen den Eigenwerten λ des Beobachters UIO und den Eigenwerten $\lambda_R$ eines Reglers R oder mit möglichst großem Abstand der Eigenwerte λ von der imaginären Achse.

Für den obigen Beobachter UIO wird von einem linearen System ausgegangen, also mit konstanten Parametern der Kopplung zwischen Drehmomentenerzeuger DE und Drehmomentensenke DS. Der beschriebene Beobachter kann aber auch auf nichtlineare System erweitert werden, wie nachfolgend erläutert wird.

Ein nichtlineares dynamisches System kann allgemein in der Form $\begin{aligned}\dot{x} &= Ax + Bu + Mf(x) + Fw \\ y &= Cx\end{aligned}$ geschrieben werden, worin M die Verstärkung der Nichtlinearität bezeichnet und auch eine Systemmatrix ist. Das gilt für Lipschitz Nichtlinearitäten für die gilt $|f(x_1)-f(x_2)| \le |x_1-x_2|$. Der Beobachter UIO mit unbekannten Eingang w ist dann definiti-onsge-

$$\dot{z} = Nz + Gu + Ly + Mf(\hat{x})$$

mäß durch $\hat{x} = z - Ey$ festgelegt. Daraus kann wieder der Beobachter-fehler e und dessen Dynamik

$$e = \hat{x} - x = z - x - Ey = z - Mx$$

e angeschrieben werden: $\dot{e} = Ne + (NM + LC - MA)x + (G - MB)u + M(f(\hat{x}) - f(x)) - MFw$. Aus der Bedingung, dass der Beobachter UIO unabhängig vom Zustand x, vom Eingang u und vom unbekannten Eingang w sein soll ergeben sich wieder die Matrizen zu MF = 0, ECF = -F, N = MA - KC, G = MB, L = K(I+ CE) - MAE und M = I+ EC. Die Dynamik e des Beobachterfehlers e folgt dann zu $\dot{e} = Ne + M(f(\hat{x}) - f(x))$. Wird wieder ein Lyapunov-Kriterium als Stabilitätskriterium verwendet kann dieses in der Form $N^TP + PN + \gamma PMM^T P + \gamma I < 0$ angeschrieben werden. Darin ist γ ein Designparameter, der vorgegeben werden kann. Mit den Vereinfachungen U = -F(CF)$^+$, V = I- (CF)(CF)$^+$ und E = U + YV kann das Stabilitätskriterium umgeschrieben werden in der Form

$$((I + UC)A)^T P + P(I + UC)A + (VCA)^T Y^T P + PY(VCA) - C^T K^T P - PKC +$$
$$+ \gamma (P(I + UC) + PY(VC))(P(I + UC) + PY(VC))^T + \gamma I < 0 \quad .$$

Diese Ungleichung wieder mit einem Gleichungslöser nach Y, K, P aufgelöst werden. Damit können die Beobachtermatrizen N, L, G, E berechnet werden und eine asymptotische Stabilität sichergestellt werden. Über den Designparameter γ können die Eigenwerte λ über die Matrix N wie gewünscht und oben beschrieben gesetzt werden.

Der Beobachter UIO kann aber auch auf andere Weise entworfen werden, wie nachfolgend $\dot{x}$ =Ax+Bu+Fw kurz erläutert wird. Hierzu wird für das dynamische System y=Cx wieder von einer Beobachterstruktur wie oben ausgegangen:

$$\dot{z} = Zz + TBu + Ky$$

$$\hat{x} = z + Hy$$

$$e = x - \hat{x}$$

Darin bezeichnet z wieder einen internen Beobachterzustand, $\hat{x}$ den geschätzten Systemzustand und e einen Beobachterfehler. Die Matrizen Z, T, K, H sind wieder Beobachtermatrizen, mit denen der Beobachter UIO ausgelegt wird. Die Dynamik des Beobachterfehlers kann dann als

$$\dot{e} = (A - HCA - K_1 C)e + (T - (I - HC))Bu + (Z - (A - HCA - K_1 C)z + (HC - I)Fw +$$
$$+ (K_2 - (A - HCA - K_1 C)Hy$$

angeschrieben werden. Hierzu wurde für die Matrix $K = K_1 + K_2$ angenommen und I bezeichnet wieder die Einheitsmatrix. Aus der Bedingung, dass die Dynamik des Beobachterfehlers nur vom Beobachterfehler e abhängen soll, ergibt sich

$$(HC - I)F = 0$$

$$T = I - HC$$

$$Z = A - HCA - K_1 C\,\dot{}$$

$$K_2 = ZH$$

Eine Schätzung des unbekannten Eingangs w ergibt sich dann zu

$$\hat{w} = (CF)^+ (\dot{y} - CA\hat{x} + CBu)\,.$$

Die Dynamik des Beobachterfehlers $\dot{e}$ = Ze wird demnach von der Matrix Z = *(A-HCA-K₁C),* und folglich von der Matrix $K_1$, bestimmt, da die anderen Matrizen Systemmatrizen oder sich daraus ergeben sind. Darin kann die Matrix $K_1$ als Designmatrix für den Beobachter UIO verwendet werden und kann dazu genutzt werden, um die Eigenwerte $\lambda$ des Beobachters UIO wie oben beschrieben zu platzieren.

Der erfindungsgemäße Beobachter UIO mit unbekanntem Eingang gilt allgemein für ein dynamisches System

$$\dot{x} = Ax + Bu + Fw \qquad \dot{x} = Ax + Bu + Mf(x) + Fw$$

$$y = Cx \qquad \text{, bzw. } y = Cx$$

. Das wird anhand eines Prüfstandes 1 für einen Verbrennungsmotor 2 (Drehmomentenerzeuger DE), der mit einer Verbindungswelle 3 (Kopplungselement KE) mit einer Belastungsmaschine 4 (Drehmomentensenke DS) verbunden ist (wie in Fig.2 dargestellt), erläutert.

Am Prüfstand 1 wird der Verbrennungsmotor 2 und die Belastungsmaschine 4 durch eine Prüfstandsteuereinheit 5 zur Durchführung eines Prüflaufs geregelt. Der Prüflauf ist üblicherweise eine Abfolge von Sollwerten SW für den Verbrennungsmotor 2 und die Belastungsmaschine 4, die durch geeignete Regler R in der Prüfstandsteuereinheit 5 eingeregelt werden. Typischerweise wird die Belastungsmaschine 4 auf eine Dynodrehzahl $\omega_D$ geregelt und der Verbrennungsmotor 2 auf ein Wellenmoment Ts. Als Stellgröße $ST_E$ für den Verbrennungsmotor 2, die vom Regler R aus den Sollwerten SW und aus gemessenen Istwerten, berechnet wird, dient beispielsweise eine Gaspedalstellung $\alpha$, die von einer Motorsteuereinheit ECU in Größen wie Einspritzmenge, Einspritzzeitpunkt, Einstellung eines Abgasrückführungssystems, usw. umgesetzt wird. Als Stellgröße $ST_D$ für die Belastungsmaschine 4 dient beispielsweise ein Sollmoment $T_{Dsoll}$, das von einem Dynoregler $R_D$ in entsprechende elektrische Ströme und/oder Spannungen für die Belastungsmaschine 4 umgesetzt wird. Die Sollwerte SW für den Prüflauf werden beispielsweise aus einer Simulation einer Fahrt eines Fahrzeugs mit dem Verbrennungsmotor 2 entlang einer virtuellen Strecke ermittelt, oder liegen einfach als zeitliche Abfolge von Sollwerten SW vor. Die Simulation soll dazu das effektive Drehmoment $T_E$ des Verbrennungsmotors 2 verarbeiten, das mit einem Beobachter UIO wie oben beschrieben geschätzt wird. Die Simulation kann dabei in der Prüfstandsteuereinheit 5 erfolgen, oder auch in einer eigenen Simulationsumgebung (Hardware und/oder Software).

Das dynamische System der Fig.2 besteht damit aus der Massenträgheit $J_E$ des Verbrennungsmotor 2 und der Massenträgheit $J_D$ der Belastungsmaschine 4, die durch eine Prüfstandwelle 4, die durch eine Drehsteifigkeit c und eine Drehdämpfung d charakterisiert wird, wie in Fig.3 dargestellt. Diese dynamischen Systemparameter, die das dynamische Verhalten des dynamischen Systems bestimmen, werden als bekannt vorausgesetzt.

Am Prüfstand 1 werden üblicherweise mit geeigneten, bekannten Messsensoren, wie Beispielsweise Drehgebern, Drehmomentensensoren, Istwerte der Drehzahl $\omega_E$ des Verbrennungsmotors 2, des Wellenmoments Ts, der Drehzahl $\omega_D$ der Belastungsmaschine 4 und des Drehmoments $T_D$ der Belastungsmaschine 4 gemessen. Allerdings sind nicht immer alle Messgrößen verfügbar, da nicht auf jedem Prüfstand 1 immer alle Messgrößen gemessen werden. Durch entsprechende Konfiguration kann der Beobachter UIO aber damit umgehen, und kann in jedem Fall das effektive Drehmoment $\hat{T}_E$ des Verbrennungsmotors 2 schätzen. Das wird am dynamischen Modell der Kombination Verbrennungsmotor 2, Prüfstandwelle 3, Belastungsmaschine 4 nach Fig.3 erläutert.

In einer ersten möglichen Variante wird nur der Verbrennungsmotor 2 betrachtet und es ergibt sich die Bewegungsgleichung $J_E\dot{\omega}_E = T_E - T_S$ mit $y = \omega_E$. Wird $T_E$ als unbekannter Eingang w verwendet, folgt das Wellenmoment Ts als Eingangsgröße u, $\omega_E$ als Zustandsgröße x und die Systemmatrizen zu $A=1/J_E$, $B=-1$, $C=1$, $F=1$. Damit kann der Beobachter UIO konfiguriert werden, der dann aus Messsignalen des Wellenmoments Ts einen Schätzwert für das effektive Drehmoment $\hat{T}_E$ des Verbrennungsmotors 2 ermittelt.

In einer zweiten Variante umfasst das Modell des dynamischen Systems auch die Verbindungswelle 3 und es wird das Drehmoment $T_D$ der Belastungsmaschine 4 als Eingang u verwendet. Als Ausgang wird die Drehzahl $\omega_E$ des Verbrennungsmotors 2 und das Wellenmoment Ts verwendet. Der Eingang u und die Ausgänge y werden am Prüfstand 1 für die Realisierung des Beobachters UIO als Messsignale gemessen. Der Zustandsvektor x ist mit $x^T = [\Delta\Phi \; \omega_D \; \omega_E]$ definiert, worin $\Delta\Phi$ die Differenz des Verdrehwinkels $\Phi_E$ der Verbindungswelle 3 am Verbrennungsmotor 2 und des Verdrehwinkels $\Phi_D$ der Verbindungswelle 3 an der Belastungsmaschine 4 ist, also $\Delta\phi = \Phi_E - \phi_D$. Der unbekannte Eingang w ist das effektive Drehmoment $T_E$ des Verbrennungsmotors 2. Daraus folgen mit den Bewegungsgleichungen, die für diesen Fall für das dynamische System der Fig.3 angeschrieben werden, die Systemmatrizen A, B, C, F zu

$$A = \begin{bmatrix} 0 & -1 & 1 \\ \dfrac{c}{J_D} & -\dfrac{d}{J_D} & \dfrac{d}{J_D} \\ -\dfrac{c}{J_E} & -\dfrac{d}{J_E} & \dfrac{d}{J_E} \end{bmatrix}, \quad B = \begin{bmatrix} 0 \\ -\dfrac{1}{J_D} \\ 0 \end{bmatrix}, \quad C = \begin{bmatrix} 0 & 0 & 1 \\ c & -d & d \end{bmatrix} \text{ und } F = \begin{bmatrix} 0 \\ 0 \\ \dfrac{1}{J_E} \end{bmatrix}.$$

Damit kann der Beobachter UIO konfiguriert werden, der dann aus den Messgrößen einen Schätzwert für das effektive Drehmoment $\hat{T}_E$ des Verbrennungsmotors 2 ermittelt.

In einer dritten Variante umfasst das Modell wieder das gesamte dynamische System mit Verbrennungsmotor 2, Verbindungswelle 3 und Belastungsmaschine 4. Es wird kein Eingang u verwendet. Als Ausgang y wird die Drehzahl $\omega_E$ des Verbrennungsmotors 2, die Drehzahl $\omega_D$ der Belastungsmaschine 4 und das Wellenmoment Ts verwendet. Die Ausgänge y werden am Prüfstand 1 für die Realisierung des Beobachters UIO als Messsignal gemessen. Der Zustandsvektor x ist wieder mit $x^T = [\Delta\Phi \; \omega_D \; \omega_E]$ definiert. Der unbekannte Eingang w ist das effektive Drehmoment $T_E$ des Verbrennungsmotors 2. Daraus folgen mit den Bewegungsgleichungen, die für diesen Fall für das dynamische System der Fig.3 angeschrieben werden, die Systemmatrizen A, B, C, F zu

$$A = \begin{bmatrix} 0 & -1 & 1 \\ \dfrac{c}{J_D} & -\dfrac{d}{J_D} & \dfrac{d}{J_D} \\ -\dfrac{c}{J_E} & -\dfrac{d}{J_E} & \dfrac{d}{J_E} \end{bmatrix}, \quad B=0,$$

$$C = \begin{bmatrix} 0 & 1 & 0 \\ 0 & 0 & 1 \\ c & -d & d \end{bmatrix} \text{ und } F = \begin{bmatrix} 0 \\ 0 \\ 1 \\ \overline{J_E} \end{bmatrix}$$ . Damit kann der Beobachter UIO konfiguriert werden, der dann aus den Messgrößen einen Schätzwert für das effektive Drehmoment $\hat{T}_E$ des Verbrennungsmotors 2 ermittelt.

In einer vierten Variante umfasst das Modell wieder das gesamte dynamische System mit Verbrennungsmotor 2, Verbindungswelle 3 und Belastungsmaschine 4. Es wird Eingang u das Drehmoment $T_D$ der Belastungsmaschine 4 verwendet. Als Ausgang y wird die Drehzahl $\omega_E$ des Verbrennungsmotors 2 und die Drehzahl $\omega_D$ der Belastungsmaschine 4 verwendet. Die Eingänge u und die Ausgänge y werden am Prüfstand 1 für die Realisierung des Beobachters UIO als Messsignale gemessen. Diese Ausführung ist besonders vorteilhaft, weil für die Realisierung des Beobachters UIO kein Messwert des Wellenmoments Ts benötigt wird, womit am Prüfstand ein Wellenmomentensensor eingespart werden kann. Der Zustandsvektor x ist wieder mit $x^T = [\Delta\Phi\ \omega_D\ \omega_E]$ definiert. Der unbekannte Eingang w ist das effektive Drehmoment $T_E$ des Verbrennungsmotors 2. Daraus folgen mit den Bewegungsgleichungen, die für diesen Fall für das

$$A = \begin{bmatrix} 0 & -1 & 1 \\ \dfrac{c}{J_D} & -\dfrac{d}{J_D} & \dfrac{d}{J_D} \\ -\dfrac{c}{J_E} & -\dfrac{d}{J_E} & \dfrac{d}{J_E} \end{bmatrix}$$

dynamische System der Fig.3 angeschrieben werden, die Systemmatrizen A, B, C, F zu

$$B = \begin{bmatrix} 0 \\ -\dfrac{1}{J_D} \\ 0 \end{bmatrix}, \quad C = \begin{bmatrix} 0 & 0 & 1 \\ 0 & 1 & 0 \end{bmatrix} \text{ und } F = \begin{bmatrix} 0 \\ 0 \\ 1 \\ \overline{J_E} \end{bmatrix}$$ . Damit kann der Beobachter UIO konfiguriert werden, der dann aus den Messgrößen einen Schätzwert für das effektive Drehmoment $\hat{T}_E$ des Verbrennungsmotors 2 ermittelt.

Wie oben erwähnt werden durch den Beobachter UIO gleichzeitig auch die Zustandsgrößen des Zustandsvektors x geschätzt.

Je nach vorhandenem Prüfstandaufbau, insbesondere in Abhängigkeit der vorhandenen Messtechnik, kann demnach ein geeigneter Beobachter UIO konfiguriert werden, was den erfindungsgemäßen Beobachter UIO sehr flexibel macht. Dabei können natürlich auch komplexerer Prüfstandsaufbauten, beispielsweise mit mehr schwingfähigen Massen, beispielsweise mit einem zusätzlichen Zweimassenschwungrad, oder anderen oder zusätzliche Kopplungen zwischen den einzelnen Massen, in gleicher Weise über die dynamischen Bewegungsgleichungen modelliert werden. Aus den sich dabei ergebenen Systemmatrizen A, B, C, F kann dann in gleicher Weise der Beobachter UIO für das effektive Drehmoment $T_E$ konfiguriert werden.

Der Beobachter UIO kann natürlich auch in einer anderen Anwendung als am Prüfstand 1 eingesetzt werden. Insbesondere bietet sich auch eine Verwendung in einem Fahrzeug mit einem Verbrennungsmotor 2 und/oder einem Elektromotor als Drehmomentenerzeuger DE an. Dabei kann der Beobachter UIO eingesetzt werden, um aus verfügbaren Messgrößen das effektive Drehmoment $\hat{T}_E$ des Drehmomentenerzeugers DE zu schätzen, das dann zur Steuerung des Fahrzeugs verwendet werden kann, beispielsweise in einer Motorsteuereinheit ECU, einer Hybridantriebsstrangsteuereinheit, einer Getriebesteuereinheit, usw. Nachdem der erfindungsgemäße Beobachter UIO mit ungefilterten, verrauschten Messsignalen arbeitet, wird auch der Schätzwert für das effektive Drehmoment $\hat{T}_E$ verrauscht sein. Ebenso werden im Schätzwert für das effektive Drehmoment $\hat{T}_E$ auch harmonische Oberschwingungsanteile enthalten sein, die daher rühren, dass sich das effektive Drehmoment $T_E$ aus der Verbrennung im Verbrennungsmotor 2 ergibt und die Verbrennungsstöße ein periodisches effektives Drehmoment $T_E$ mit einer Grundfrequenz und Harmonischen erzeugen. Das kann für gewisse Anwendungen durchaus erwünscht sein. Insbesondere die durch die Verbrennungsstöße eingebrachten Schwingungen sollen am Prüfstand oftmals abgebildet werden, beispielsweise wenn ein Hybridantriebsstrang geprüft werden soll und die Auswirkung der Verbrennungsstöße auf den Antriebsstrang berücksichtigt werden sollen. Allerdings kann es auch Anwendungen geben, bei denen ein verrauschtes und mit harmonischen Oberwellen überlagertes geschätztes effektives Drehmoment $\hat{T}_E$ unerwünscht sind, beispielsweise in einem Fahrzeug. Die Grundfrequenz ω der Verbrennungsstöße, und natürlich auch die Frequenzen der Harmonischen, hängt dabei natürlich vom Verbrennungsmotor 2 ab, insbesondere Anzahl der Zylinder und Typ des Verbrennungsmotors 2 (z.B. Otto oder Diesel, 2-Takt oder 4-Takt, usw.), aber auch von der aktuellen Drehzahl $\omega_E$ des Verbrennungsmotors 2. Aufgrund der Abhängigkeit von der Drehzahl $\omega_E$ des Verbrennungsmotors 2 ist ein Filter F zum Filtern eines periodischen, verrauschten, harmonisch verzerrten Messsignals MS nicht trivial.

Aber auch das effektive Drehmoment $\hat{T}_E$ eines Elektromotors umfasst in der Regel periodische Schwingung mit harmonischen Oberwellen, die in diesem Fall vom Schalten in einem Umrichter des Elektromotors herrühren können. Auch diese Schwingungen sind drehzahlabhängig. Auch hierfür kann das erfindungsgemäße Filter F eingesetzt werden.

Die Erfindung umfasst daher auch ein Filter F, das für Messsignale MS geeignet ist, das gemäß einer veränderlichen Grundfrequenz ω periodisch ist und durch Harmonische der Grundfrequenz ω verzerrt ist und auch verrauscht (durch Messrauschen und/oder Systemrauschen) sein kann. Das Filter F ist dabei auf beliebige solche Messsignale MS anwendbar, beispielsweise Messungen einer Drehzahl oder eines Drehmoments, eines Drehwinkels, einer Beschleunigung, einer Geschwindigkeit, aber auch eines elektrischen Stromes oder einer elektrischen Spannung. Das Filter F ist dabei auch unabhängig vom erfindungsgemäßen Beobachter UIO, kann aber auch ein mit dem Beobachter geschätztes effektives Drehmoment $\hat{T}_E$ als Messsignal MS verarbeiten. Das Filter F stellt daher eine eigenständige Erfindung dar.

Das erfindungsgemäße Filter F umfasst ein Tiefpassfilter LPF und zumindest ein selbstadaptives Harmonikfilter LPVHn für zumindest eine harmonische Frequenz $\omega_n$, als n-faches der Grundfrequenz ω, wie in Fig.4 dargestellt. Normalerweise sind mehrere Harmonikfilter LPVHn für verschiedene harmonische Frequenzen $\omega_n$ vorgesehen, wobei vorzugsweise die niederen Harmonischen berücksichtigt werden. n muss dabei natürlich keine ganze Zahl sein, sondern hängt nur vom jeweiligen Messsignal MS oder dessen Herkunft ab. n kann aber in der Regel aus der jeweiligen Anwendung als bekannt vorausgesetzt werden. Nachdem die Grundfrequenz ω veränderlich ist, sind natürlich auch die harmonischen Frequenzen $\omega_n$ veränderlich, sodass die Harmonikfilter LPVHn selbstadaptiv hinsichtlich der Grundfrequenz ω sind, d.h. dass sich die Harmonikfilter LPVHn selbsttätig auf eine Veränderung der Grundfrequenz ω einstellen.

Das Tiefpassfilter LPF dient dem Ausfiltern hochfrequenter Rauschanteile des Messsignals MS und kann auf eine bestimmte Grenzfrequenz $\omega_G$, die natürlich von der Charakteristik des Rauschens abhängig sein kann, eingestellt sein. Das Tiefpassfilter LPF kann beispielsweise als IIR Filter (Filter mit unendlicher Impulsantwort) mit der allgemeinen Form in z-Domain Schreibweise (da das Filter F in der Regel digital implementiert sein wird)

$$y(k) = b_0 x(k) + ... + b_{N-1} x(k-N+1) - a_1 y(k-1) - ... - a_M y(k-M)$$

realisiert sein. Darin ist y das gefilterte Ausgangssignal und x das Eingangssignal (hier also das Messsignal MS), jeweils zum aktuellen Zeitpunkt k und zu vergangenen Zeitpunkten. Das Filter kann mit bekannten Filterentwurfsverfahren entworfen werden, um das gewünschte Filterverhalten (insbesondere Grenzfrequenz, Verstärkung, Phasenverschiebung) zu erhalten. Daraus kann ein einfaches Tiefpassfilter der Form $LPF(Z) = \dfrac{k_0}{Z - 1 + k_0}$ abgeleitet werden. Darin ist ko der einzige Designparameter, der hinsichtlich der gewünschten Dynamik und Rauschunterdrückung eingestellt werden kann. Dabei gilt, dass ein schnelles Tiefpassfilter LPF in der Regel schlechtere Rauschunterdrückung aufweisen wird, und umgekehrt. Es wird daher mit dem Parameter ko üblicherweise ein gewisser Kompromiss dazwischen eingestellt.

Es kommen dabei aber natürlich auch beliebige andere Implementierungen eines Tiefpassfilters LPF in Frage, z.B. als FIR Filter (Filter mit endlicher Impulsantwort).

Der Ausgang des Tiefpassfilters LPF ist das gefilterte Messsignal $MS_F$, aus dem die Rauschanteile gefiltert wurden. Der Tiefpassfilter LPF erzeugt einen gleitenden Mittelwert. Der Eingang des Tiefpassfilters LPF ist die Differenz des Messsignals MS und der Summe des Mittelwertes des Messsignals MS und der berücksichtigten harmonischen Anteile Hn. Der Tiefpassfilter LPF verarbeitet damit nur die Wechselanteile des Messsignals MS bei der Grundfrequenz ω (und allfälliger übrig gebliebenen Oberwellen).

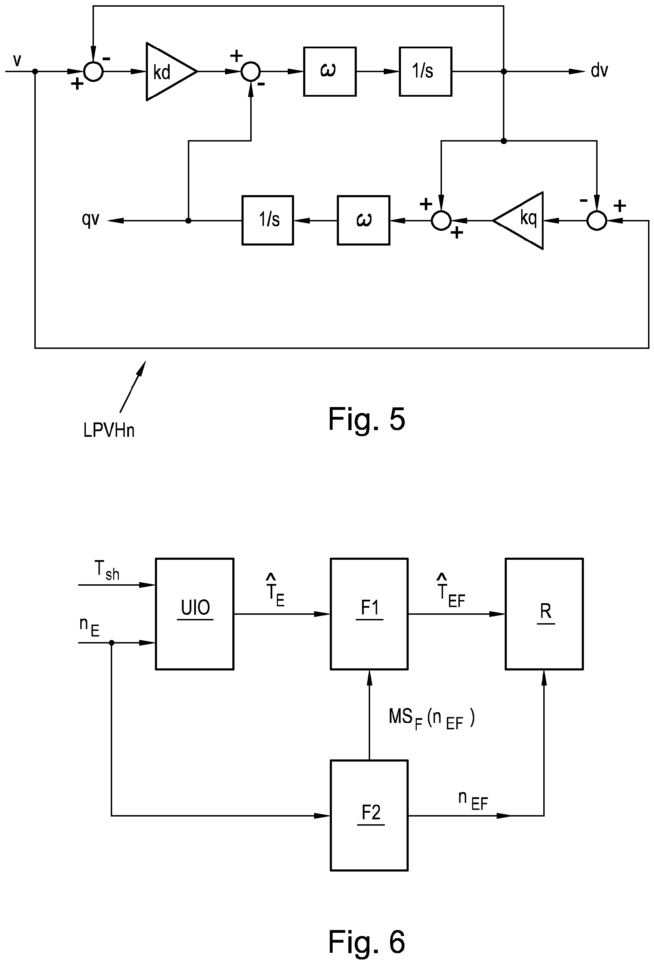

Die Harmonikfilter LPVHn ermitteln die harmonischen Anteile Hn des Messsignals MS. Die harmonischen Anteile sind Schwingungen mit der jeweiligen harmonischen Frequenz. Dem Harmonikfilter LPVHn liegt ein orthogonales System zugrunde, das auf Basis eines generalisierten Integrators zweiter Ordnung (SOGI) implementiert wird. Ein orthogonales System erzeugt eine Sinus Schwingung (d-Komponente) und eine orthogonale Cosinus Schwingung (90° Phasenverschoben; q-Komponente) einer bestimmten Frequenz ω - das kann als rotierender Zeiger in einem dq-Koordinatensystem betrachtet werden, der mit ω rotiert und der damit die harmonische Schwingung abbildet. Der SOGI ist definiert als $G(s) = k \dfrac{s\omega}{s^2 + \omega^2}$ und hat eine Resonanzfrequenz bei ω. Das orthogonale System im Harmonikfilter LPVHn hat die Struktur wie in Fig.5 dargestellt. dv hat dieselbe Phase wie die Grundschwingung des Eingangs v und vorzugsweise auch die dieselbe Amplitude. qv ist um 90° phasenverschoben. Die Übertragungsfunktion $G_d(s)$ zwischen dv und v und die Übertragungsfunktion $G_q(s)$ zwischen qv und v ergeben sich demnach zu

$$G_d(s) = \frac{k_d s - \omega k_q}{s^2 + k_d s + \omega^2 - \omega k_q} \quad \text{und} \quad G_d(s) = \frac{k_q s + \omega k_d}{s^2 + k_d s + \omega^2 - \omega k_q}$$

. Der harmonische Anteil Hn des Harmonikfilters LPVHn entspricht dabei der d-Komponente.

Durch das integrierende Verhalten des Harmonikfilters LPVHn wird sich bei einer Änderung am Eingang des Harmonikfilters LPVHn der Ausgang auf die neue Resonanzfrequenz einschwingen, womit der harmonische Anteil Hn einer Änderung im Messsignal MS nachgeführt wird. Verändert sich das Messsignal MS nicht, verändert sich nach dem Einschwingen auch der harmonische Anteil Hn nicht.

Das Ziel ist es nun die Verstärkungen $k_d$, $k_q$ als Funktion von der Frequenz $\omega$ einzustellen, damit sich das Harmonikfilter LPVHn selbst auf veränderliche Frequenzen anpassen kann. Hierfür kann beispielsweise ein Luenberger-Beobachteransatz (A - LC) mit Polvorgabe der Eigenwerte gewählt werden.

$$A = \begin{bmatrix} 0 & -\omega \\ \omega & 0 \end{bmatrix}$$

ist dabei die Systemmatrix und C = [1 0] die Ausgangsmatrix, wobei im Ausgang nur die d-Komponenten berücksichtigt werden. Damit ergibt sich

$$(A - LC) = \begin{bmatrix} 0 & -\omega \\ \omega & 0 \end{bmatrix} - \begin{bmatrix} k_d \\ k_q \end{bmatrix} = \begin{bmatrix} -k_d & -\omega \\ \omega - k_q & 0 \end{bmatrix}$$

. Die Eigenwerte $\lambda$ ergeben sich damit zu

$$(\lambda I - (A - LC)) = 0 = \begin{vmatrix} \lambda + k_d & \omega \\ -\omega + k_q & \lambda \end{vmatrix}$$

. Durch Auflösen erhält man schließlich die Eigenwerte

$$\lambda = \frac{k_d}{2} \pm \frac{1}{2}\sqrt{k_d^2 - 4\left(-k_q\omega + \omega^2\right)}$$

. Nachdem es das Ziel ist, dass die Schwingungsmodi der Eigenwerte $\lambda$ dieselbe Frequenz haben wie die Frequenz der Harmonischen im Harmonikfilter LPVHn ergibt sich

$$\frac{1}{2}\sqrt{k_d^2 - 4\left(-k_q\omega + \omega^2\right)} = j\omega$$

, was zu $k_d^2 + 4k_q\omega = 0$ führt. Durch Einführen eines Designparameters $\alpha = k_d^2 + k_q^2$, erhält man mit $k_d^2 = -4k_q\omega$ letztendlich $k_q = 2\omega \pm \sqrt{4\omega^2 + \alpha}$. Das führt zu den Gleichungen für die beiden Verstärkungen $k_d$ und $k_q$ in der Form $k_d = \sqrt{\alpha - k_q^2}$ und $k_q = 2\omega - \sqrt{4\omega^2 + \alpha}$. Daraus erkennt man, dass die Verstärkungen $k_d$ und $k_q$ einfach an eine sich verändernde Frequenz $\omega$ angepasst werden können und damit der Frequenz $\omega$ nachgeführt werden können. Der Harmonikfilter LPVHn für die n-te harmonische Schwingung zur Grundfrequenz $\omega$ kann dann einfach dadurch erzielt werden, indem in den Gleichungen für die Verstärkungen $k_d$, $k_q$ einfach die n-fachen Frequenzen n·$\omega$ verwendet werden: $k_q = 2\omega - \sqrt{4n\omega^2 + \alpha}$.

Der Designparameter $\alpha$ kann geeignet gewählt werden. Beispielsweise kann der Designparameter $\alpha$ vom Signal-Stör-Verhältnis im Eingangssignal v des Harmonikfilters LPVHn gewählt werden. Wenn das Eingangssignal v wenig bis kein Rauschen enthält, kann der Designparameter $\alpha > 1$ gewählt werden. Ist das Eingangssignal v hingegen verrauscht, sollte der Designparameter $\alpha < 1$ gewählt werden.

Die aktuelle Grundfrequenz $\omega$, die im Harmonikfilter LPVHn benötigt wird, kann wiederum aus dem vom Tiefpassfilter LPF erzeugten Mittelwert erhalten werden, da darin noch die Grundfrequenz $\omega$ enthalten ist. Daher ist in Fig.4 als weiterer Eingang in das Harmonikfilter LPVHn der Ausgang vom Tiefpassfilter LPF vorgesehen. Die aktuelle Grundfrequenz $\omega$ kann aber natürlich auch anderweitig beigestellt werden. Beispielsweise könnte diese aus der Kenntnis eines Verbrennungsmotors 2 und einer bekannten aktuellen Drehzahl des Verbrennungsmotors 2 auch berechnet werden.

Eine bevorzugte Verwendung des Filters F ist in Fig.6 dargestellt. Der erfindungsgemäße Beobachter UIO schätzt beispielsweise aus dem gemessenen Wellenmoment $T_{Sh}$ und der Drehzahl $n_E$ eines Verbrennungsmotors 2 (beispielsweise auf einem Prüfstand 1 oder in einem Fahrzeug) das innere effektive Drehmoment $\hat{T}_E$ des Verbrennungs-motors 2 (Drehmomentenerzeuger DE). Das periodische, verrauschte, mit den Harmonischen Hn überlagerte geschätzte effektive Drehmoment $\hat{T}_E$ wird in einem nachgeschalteten Filter F1 gefiltert. Der daraus entstehende Mittelwert $\hat{T}_{EF}$ kann beispielsweise in einem Regler R oder in einer Steuereinheit eines Fahrzeugs weiterverarbeitet werden.

Der Beobachter UIO verarbeitet in den meisten Fällen zumindest zwei Eingangssignale u(t), so wie in Fig.6 das Wellenmoment $T_{Sh}$ und die Drehzahl $n_E$. Damit kann in einer besonders vorteilhaften Ausgestaltung eines der beiden Signale verwendet werden, um ein anderes Signal zu synchronisieren, was für die weitere Verarbeitung vorteilhaft ist. Beispielsweise kann ein Eingangssignal in den Beobachter UIO mit einem erfindungsgemäßen Filter F2 gefiltert werden. Der dabei erzeugte Mittelwert $MS_F$ (hier $n_{EF}$) kann dann in einem zweiten Harmonikfilter F1 für das geschätzte effektive Drehmoment $\hat{T}_E$ verarbeitet zu werden, um daraus die Information über die aktuelle Grundfrequenz $\omega$ zu erhalten und um damit gleichzeitig die beiden Filter F1, F2 aufeinander zu synchronisieren. Die beiden gefilterten Ausgangssignale der beiden Filter F1, F2 sind damit synchron aufeinander.

Ein erfindungsgemäßes Filter F kann aber auch gänzlich ohne Beobachter U|O verwendet werden, beispielsweise um ein periodisches, verrauschtes und mit Harmonischen überlagertes Signal zu filtern, um das gefilterte Signal weiterzuverarbeiten. In einer bestimmten Anwendung des Drehmomentenerzeugers DE, beispielsweise auf einem Prüfstand 1, kann ein gemessenes Messsignal MS, beispielsweise ein Wellenmoment $T_{Sh}$ oder eine Drehzahl $n_E$, $n_D$, durch ein erfindungsgemäßes Filter F gefiltert werden. Das ermöglicht es je nach Bedarf entweder das ungefilterte Signal oder aber das gefilterte Signal zu verarbeiten.

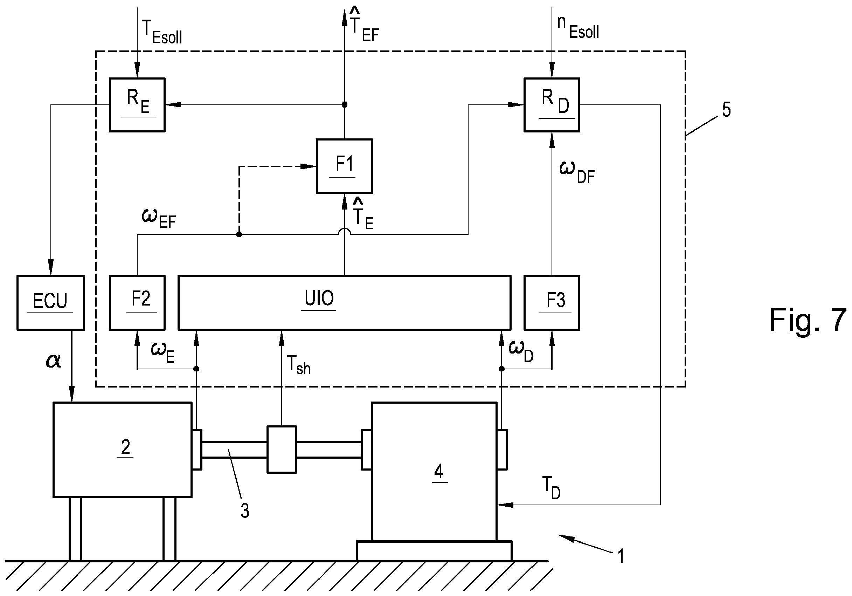

Eine typische Anwendung des erfindungsgemäßen Beobachters UIO und Filters F ist in Fig.7 dargestellt. Am Prüfstand 1 ist eine Prüfanordnung mit einem Verbrennungsmotors 2 als Drehmomentenerzeuger DE und einer Belastungsmaschine 4 als Drehmomentensenke DS, die mit einer Verbindungswelle 3 verbunden sind, angeordnet. Zur Durchführung eines Prüflaufs wird ein Sollmoment $T_{Esoll}$ des Verbrennungsmotors 2 und eine Solldrehzahl $n_{Esoll}$ des Verbrennungsmotors 2 vorgegeben. Die Solldrehzahl $n_{Esoll}$ wird dabei mit einem Dynoregler $R_D$ mit der Belastungsmaschine 4 eingeregelt und das Sollmoment $T_{Esoll}$ mit einem Motorregler $R_E$ direkt am Verbrennungsmotor 2. Als Istgröße für den Motorregler $R_E$ wird mit einem Beobachter UIO aus Messgrößen des Wellenmoments $T_{Sh}$, der Drehzahl $\omega_E$ des Verbrennungsmotors 2 und der Drehzahl $\omega_D$ der Belastungsmaschine das effektive Drehmoment $\hat{T}_E$ des Verbrennungsmotors 2 geschätzt. Dieses wird in einem ersten Filter F1 gefiltert und dem Motorregler $R_E$ übergeben, der den Verbrennungsmotor 2 steuert, beispielsweise über die Motorsteuereinheit ECU. Der Dynoregler $R_D$ erhält als Istgrößen die aktuelle gemessene Motordrehzahl $\omega_E$ und die gemessene Drehzahl der Belastungsmaschine $\omega_D$ und berechnet ein Drehmoment $T_D$ der Belastungsmaschine 4, das an der Belastungsmaschine 4 einzustellen ist. Der Dynoregler $R_D$ verarbeitet jedoch nicht die gemessenen Messsignale, sondern die gefilterten Messsignale $\omega_{EF}$, $\omega_{DF}$, die in einem zweiten und dritten erfindungsgemäßen Filter F2, F3 gefiltert werden. Das erste Filter F1 kann wie anhand Fig.6 beschrieben auch auf die Drehzahl $\omega_E$ des Verbrennungsmotors 2 synchronisiert werden, wie durch die strichlierte Linie angedeutet ist.

Ein erfindungsgemäßes Filter F kann bedarfsweise oder je nach Anwendung ein- oder ausgeschaltet werden. Damit kann beispielsweise ein Regler R, der das geschätzte effektive Drehmoment $\hat{T}_E$ verarbeitet entweder mit den ungefilterten oder den gefilterten Schätzwerten für das effektive Drehmoment arbeiten.

## Patentansprüche

1. Verfahren zum Bereitstellen eines Schätzwertes ($\hat{T}_E$) eines inneren effektiven Drehmoments ($T_E$) eines Drehmomentenerzeugers (DE), der über ein Koppelungselement (KE) mit einer Drehmomentensenke (DS) verbunden wird

$$\dot{x} = Ax + Bu + Fw$$

und das sich ergebende lineare dynamische System in Zustandsraumdarstellung in der Form $y = Cx$ oder das sich ergebende nichtlineare dynamische System in Zustandsraumdarstellung in der Form

$$\dot{x} = Ax + Bu + Mf(x) + Fw$$

$$y = Cx$$ 
verwendet wird, worin die Matrizen A, B, C, F, M Systemmatrizen sind, die sich aus einem Modell des dynamischen Systems, das das effektive Drehmoment ($T_E$) enthält, ergeben , worin M die Verstärkung der Nichtlinearität bezeichnet und worin u ein Eingangsvektor, y ein Ausgangsvektor und x ein Zustandsvektor des dynamischen Systems ist und w das effektive Drehmoment ($T_E$) als unbekannten Eingang bezeichnet, **dadurch gekennzeichnet, dass** für dieses dynamische System ein Beobachter (UIO) mit Beobachtermatrizen N, L, G, E oder Z, T, K, H und mit unbekanntem Eingang w entworfen wird, und der Beobachter (UIO) zumindest ein verrauschtes Messsignal des Eingangsvektors u und/oder des Ausgangsvektors y erhält und der daraus eine Schätzung $\hat{x}$ des Zustandsvektors x und eine Schätzung ($\hat{T}_E$) des effektiven Drehmoments ($T_E$) als unbekannten Eingang w ermittelt, indem die Matrix N oder Z, die die Dynamik $\dot{e}$ des Beobachterfehlers $e = \hat{x}-x$ als Differenz des Zustandsvektors x und des geschätzten Zustandsvektors $\hat{x}$ gemäß $e = Ne$ oder $e = Ze$ bestimmt, ausgelegt wird, sodass die Eigenwerte $\lambda$ dieser Matrix N oder Z in einem Bereich f2/5 > $\lambda$ > 5·f1 liegen, worin f1 die maximal zu erwartende Änderungsfrequenz des zumindest einen Messsignals ist und das Rauschen im zumindest einen Messsignal das Frequenzband größer der Frequenz f2 beeinflusst.

2. Verfahren nach Anspruch 1, **dadurch gekennzeichnet, dass** für die Stabilität der Dynamik des Beobachterfehlers $(\dot{e})$ ein Stabilitätskriterium verwendet wird, anhand dem die Beobachtermatrizen N, L, G, E oder Z, T, K, H berechnet werden.

3. Verfahren nach Anspruch 1 oder 2, **dadurch gekennzeichnet, dass** die komplexen Eigenwerte $(\lambda)$ in einem Koordinatensystem mit einer imaginären Achse als Ordinate und einer reelle Ache als Abszisse betrachtet werden und ein Dämpfungswinkel $(\beta)$ den Winkel zwischen der imaginären Achse und einer Gerade durch einen Eigenwert $(\lambda)$ und dem Ursprung des Koordinatensystems angibt, und dass der Dämpfungswinkel $(\beta)$ für den Eigenwert, der der imaginären Achse am nächsten ist, im Bereich von $\pi/4$ und $3 \cdot \pi/4$ liegen.

4. Verfahren nach einem der Ansprüche 1 bis 3, **dadurch gekennzeichnet, dass** der mit dem Beobachter (UIO) geschätzte Schätzwert des effektiven Drehmoment $(\hat{T}_E)$ einem Filter (F) zugeführt wird, das das geschätzte effektive Drehmoment $(\hat{T}_E)$ in einem Tiefpassfilter (LPF) mit einer vorgegebenen Grenzfrequenz größer einer Grundfrequenz $(\omega)$ tiefpassgefiltert wird, dass in zumindest einem selbstadaptiven Harmonikfilter (LPVHn) ein harmonischer Schwingungsanteil (Hn) des geschätzten effektiven Drehmoments $(\hat{T}_E)$ als n-faches der Grundfrequenz $(\omega)$ ermittelt wird und der zumindest eine harmonische Schwingungsanteil (Hn) zum tiefpassgefilterten geschätzten Drehmoment $(\hat{T}_{EF})$ addiert wird und die entstehende Summe vom vom Beobachter (UIO) gelieferten geschätzten Drehmoment $(T_E)$ abgezogen wird und die entstehende Differenz als Eingang in das Tiefpassfilter (LPF) verwendet wird **und dass** der Ausgang des Tiefpassfilters (LPF) als gefiltertes geschätztes effektives Drehmoment $(\hat{T}_{EF})$ ausgegeben wird.

5. Verfahren nach Anspruch 4, **dadurch gekennzeichnet, dass** das zumindest eine Harmonikfilter (LPVHn) als orthogonales System implementiert wird, das eine d-Komponente und eine q-Komponente des Schätzwertes des effektiven Drehmoment $(\hat{T}_E)$ verwendet, wobei die d-Komponente in Phase mit dem Schätzwert $(\hat{T}_E)$ ist und die q-Komponenten zur d-Komponente um 90° phasenverschoben ist, dass eine erste Übertragungsfunktion $(G_d)$ zwischen dem Eingang in das Harmonikfilter (LPVHn) und der d-Komponente und eine zweite Übertragungsfunktion $(G_q)$ zwischen dem Eingang in das Harmonikfilter (LPVHn) und der q-Komponente aufgestellt wird **und dass** Verstärkungsfaktoren $(k_d, k_q)$ der Übertragungsfunktionen $(G_d, G_q)$ als Funktion der harmonischen Frequenz $(\omega_n)$ ermittelt werden.

6. Verfahren nach Anspruch 5, **dadurch gekennzeichnet, dass** die d-Komponente als harmonischer Schwingungsanteil (Hn) verwendet wird.

7. Verfahren nach Anspruch 5 oder 6, **dadurch gekennzeichnet, dass** der vom Tiefpassfilter (LPF) ausgegebene tiefpassgefilterte Schätzwert des effektiven Drehmoment $(\hat{T}_{EF})$ im zumindest einen Harmonikfilter (LPVHn) verwendet wird, um daraus die aktuelle Grundfrequenz $(\omega)$ zu ermitteln.

8. Verfahren nach Anspruch 5 oder 6, **dadurch gekennzeichnet, dass** der Beobachter (UIO) ein erstes und ein zweites Messsignal verarbeitet und der Schätzwert des effektiven Drehmoment $(T_E)$ mit einem ersten Filter (F1) gefiltert wird und das zweite Messsignal mit einem zweiten Filter (F2) gefiltert wird und das vom Tiefpassfilter (LPF) des zweiten Filters (F2) ausgegebene tiefpassgefilterte zweite Messsignal $(MS_F)$ im zumindest einen Harmonik-AV-3966 WO filter (LPVHn) des ersten Filters (F1) verwendet wird, um daraus im ersten Filter (F1) die aktuelle Grundfrequenz $(\omega)$ zu ermitteln.

9. Verwendung des mit einem Verfahren nach einem der Ansprüche 1 bis 8 geschätzten effektiven Drehmoment $(T_E)$ in einem Regler (R) zum Regeln des Drehmomentenerzeugers (DE) und/oder der Drehmomentensenke (DS).

10. Verwendung nach Anspruch 9, **dadurch gekennzeichnet, dass** die Realteile der Eigenwerte $(\lambda)$ des Beobachters (UIO) kleiner sind, als die Realteile der Eigenwerte $(\lambda_R)$ des Reglers (R).

11. Prüfstand zum Durchführen eines Prüflaufs für einen Prüfling mit einem Drehmomentenerzeuger (DE), der über ein Koppelungselement (KE) mit einer Drehmomentensenke (DS) verbunden ist, und am Prüfstand (1) eine Prüfstandsteuereinheit (5) vorgesehen ist, in der ein Regler (R) implementiert ist, um den Drehmomentenerzeuger (DE) oder die Drehmomentensenke (DS) zu regeln, und der Regler (R) ein inneres effektives Drehmoment $(T_E)$ des Drehmomentenerzeugers (DE) verarbeitet, wobei der Prüfling als lineares dynamisches System in Zustandsraumdarstellung

$$\dot{x} = Ax + Bu + Fw$$

in der Form $y = Cx$ oder als nichtlineares dynamisches System in Zustandsraumdarstellung in der

$$\dot{x} = Ax + Bu + Mf(x) + Fw$$

Form $y = Cx$ modelliert ist, worin die Matrizen A, B, C, F, M Systemmatrizen sind, die sich aus einem Modell des dynamischen Systems, das das effektive Drehmoment ($T_E$) enthält, ergeben worin M die Verstärkung der Nichtlinearität bezeichnet und worin u ein Eingangsvektor, y ein Ausgangsvektor und x ein Zustandsvektor des dynamischen Systems ist und w das effektive Drehmoment ($T_E$) als unbekannten Eingang bezeichnet, **dadurch gekennzeichnet, dass** in der Prüfstandsteuereinheit (5) für dieses dynamische System ein Beobachter (UIO) mit Beobachtermatrizen N, L, G, E oder Z, T, K, H und mit dem unbekanntem Eingang w implementiert ist, und am Prüfstand (1) ein Messsensor vorgesehen ist, der zumindest ein verrauschtes Messsignal des Eingangsvektors u und/oder des Ausgangsvektors y erfasst und der Beobachter (UIO) daraus eines Schätzung ($\hat{x}$) des Zustandsvektors x und eine Schätzung $\hat{T}_E$ des effektiven Drehmoments $T_E$ als unbekannten Eingang w schätzt, indem die Matrix N oder Z, die die Dynamik $\dot{e}$ des Beobachterfehlers e = $\hat{x}$ - x als Differenz des Zustandsvektor x und des geschätzten Zustandsvektors $\hat{x}$ gemäß e = Ne oder e = Ze bestimmt, ausgelegt ist, sodass die Eigenwerte $\lambda$ dieser Matrix N oder Z in einem Bereich f2/5 > $\lambda$ > 5·f1 liegen, worin f1 die maximal zu erwartende Änderungsfrequenz des zumindest einen Messsignals ist und das Rauschen im zumindest einen Messsignal das Frequenzband größer der Frequenz f2 beeinflusst.

**Claims**

1.  Method for providing an estimated value ($\hat{T}_E$) of an internal effective torque ($T_E$) of a torque generator (DE), which is connected to a torque sink (DS) via a coupling element (KE) and uses the resultant linear dynamic system in

$$\dot{x} = Ax + Bu + Fw$$

state-space representation in the form $y = Cx$ or the resultant non-linear dynamic system in state-

$$\dot{x} = Ax + Bu + Mf(x) + Fw$$

space representation in the form $y = Cx$ , where the matrices A, B, C, F, M are system matrices which result from a model of the dynamic system which contains the effective torque ($T_E$), wherein M designates the gain of the nonlinearity, and where u is an input vector, y an output vector, and x a state vector of the dynamic system, and w designates the effective torque ($T_E$) as an unknown input, **characterized in that** for said dynamic system an observer (UIO) is designed with observer matrices N, L, G, E, or Z, T, K, H and with an unknown input w, and the observer (UIO) receives at least one noisy measurement signal of the input vector u and/or the output vector y, and which observer therefrom ascertains an estimate $\hat{x}$ of the state x and an estimate ($\hat{T}_E$) of the effective torque ($T_E$) as an unknown input w, **in that** the matrix N or Z, which determines the dynamic $\dot{e}$ of the observer error e = $\hat{x}$ -x as a difference between the state vector x and the estimated state vector $\hat{x}$ according to e = Ne or e = Ze, is configured in such a way that the eigenvalues $\lambda$ of this matrix N or Z lie in a range f2/5 > $\lambda$ > 5·f1, wherein f1 is the maximum expected change frequency of the at least one measurement signal, and the noise in the at least one measurement signal influences the frequency band which is greater than the frequency f2.

2.  Method according to claim 1, **characterized in that** a stability criterion is used for the stability of the dynamics of the observer error ($\dot{e}$), on the basis of which the observer matrices N, L, G, E, or Z, T, K, H are calculated.

3.  Method according to claim 1, or 2, **characterized in that** the complex eigenvalues ($\lambda$) are considered in a coordinate system with an imaginary axis as the ordinate and a real axis as the abscissa, and a damping angle ($\beta$) gives the angle between the imaginary axis and a straight line through an eigenvalue ($\lambda$)and the origin of the coordinate system, and that the damping angle ($\beta$) for the eigenvalue that is closest to the imaginary axis is in the range $\pi/4$ and $3 \cdot \pi/4$.

4.  Method according to any of the claims 1 to 3, **characterized in that** the estimated value of the effective torque ($\hat{T}_E$) estimated by the observer (UIO) is fed to a filter (F), that the estimated effective torque ($\hat{T}_E$) is low-pass filtered in a low-pass filter (LPF) with a predetermined cutoff frequency greater than a fundamental frequency ($\omega$), that in at least one self-adaptive harmonic filter (LPVHn) a harmonic vibration component (Hn) of the estimated effective

torque $(\hat{T}_E \hat{T}_E)$ is ascertained as n times the fundamental frequency ($\omega$) and the at least one harmonic vibration component (Hn) is added to the low-pass filtered estimated torque $(\hat{T}_{EF})$ and the resulting sum is subtracted from the estimated torque $(\hat{T}_E \hat{T}_E)$ supplied by the observer (UIO) and the resulting difference is used as an input to the low-pass filter (LPF) **and that** the output of the low pass filter (LPF) is output as a filtered total estimated effective torque $(\hat{T}_{EF})$.

5. Method according to claim 4, **characterized in that** the at least one harmonic filter (LPVHn) is implemented as an orthogonal system that uses a d component and a q component of the estimated value of the effective torque $(\hat{T}_E \hat{T}_E)$, wherein the d component is in phase with the estimated value $(\hat{T}_E \hat{T}_E)$ and the q component is 90° out of phase with the d component, that a first transfer function $(G_d)$ is established between the input into the harmonic filter (LPVHn) and the d component and a second transfer function $(G_q)$ is established between the input into the harmonic filter (LPVHn) and the q component **and that** gain factors $(k_d, k_q)$ of the transfer functions $(G_d, G_q)$ can be ascertained as a function of the harmonic frequency $(\omega_n)$.

6. Method according to claim 5, **characterized in that** the d component is used as a harmonic vibration component (Hn).

7. Method according to claim 5 or 6, **characterized in that** the low-pass filtered estimated value of the effective torque $(\hat{T}_{EF})$ output by the low-pass filter (LPF) is used in at least one harmonic filter (LPVHn) in order to ascertain the current fundamental frequency ($\omega$).

8. Method according to claim 5 or 6, **characterized in that** the observer (UIO) processes a first and a second measurement signal and the estimated value of the effective torque $(\hat{T}_E)$ is filtered with a first filter (F1) and the second measurement signal is filtered with a second filter (F2) and the low-pass filtered second measurement signal (MS_F) output by the low-pass filter (LPF) of the second filter (F2) is used in the at least one harmonic filter (LPVHn) of the first filter (F1), to ascertain the current fundamental frequency ($\omega$) in the first filter (F1).

9. Use of the effective torque $(\hat{T}_E \hat{T}_E)$ estimated with a method according to one of the claims 1 to 8 in a controller (R) for regulating the torque generator (DE) and/or the torque sink (DS).

10. Use according to claim 9, **characterized in that** the real parts of the eigenvalues ($\lambda$) of the observer (UIO) are smaller than the real parts of the eigenvalues ($\lambda_R$) of the controller (R).

11. Test bench for performing a test run for a test object with a torque generator (DE), which is connected to a torque sink (DS) via a coupling element (KE), and a test bench control unit (5) is provided on the test bench (1), in which a controller (R) is implemented to regulate the torque generator (DE) or the torque sink (DS), and the regulator (R) processes an internal effective torque $(T_E)$ of the torque generator (DE), wherein the test object is modeled as a

$$\dot{x} = Ax + Bu + Fw$$

linear dynamic system in state-space representation in the form of $y = Cx$ or as a non-linear dynamic

$$\dot{x} = Ax + Bu + Mf(x) + Fw$$

system in state-space representation in the form of $y = Cx$, in which the matrices A, B, C, F, M are system matrices which result from a model of the dynamic system which contains the effective torque $(T_E)$, wherein M designates the gain of the nonlinearity, and in which u is an input vector, y is an output vector, and x is a status vector of the dynamic system, and w designates the effective torque $(T_E)$ as an unknown input, **characterized in that** in the test bench control unit (5) for this dynamic system an observer (UIO) is implemented having observer matrices N, L, G, E, or Z, T, K, H and having the unknown input w, and a test sensor is provided on the test bench (1) which has at least one noisy measurement signal of the input vector u and/or the output vector y and the observer (UIO) therefrom ascertains an estimate $\hat{x}$ of the state vector x and an estimate $(\hat{T}_E)$ of the effective torque $(T_E)$ as an unknown input w by designing the matrix N or Z, which determines the dynamics $\dot{e}$ of the observer error $e = \hat{x} - x$ as a difference between the state vector x and the estimated state vector $\hat{x}$ according to e = Ne or e = Ze, so that the eigenvalues $\lambda$ of this matrix N or Z lie in a range $f2/5 > \lambda > 5 \cdot f1$, where f1 is the maximum expected change frequency of the at least one measurement signal and the noise in the at least one measurement signal influences the frequency band greater than the frequency f2.

**Revendications**

1. Procédé permettant de fournir une valeur estimée $(\hat{T}_E)$ d'un couple effectif interne $(T_E)$ d'un générateur de couple (DE), lequel est relié à un puits de couple (DS) par l'intermédiaire d'un élément d'accouplement (KE) et le système dynamique linéaire résultant est utilisé dans une représentation d'espace d'état sous la forme

$$\dot{x} = Ax + Bu + Fw$$
$$y = Cx$$

ou le système dynamique non linéaire résultant est utilisé dans une représentation d'espace

$$\dot{x} = Ax + Bu + Mf(x) + Fw$$

d'état sous la forme $y = Cx$ , les matrices A, B, C, F, M étant des matrices de système résultant d'un modèle du système dynamique contenant le couple effectif $(T_E)$, M désignant l'amplification de la non-linéarité et u étant un vecteur d'entrée, y étant un vecteur de sortie et x étant un vecteur d'état du système dynamique et w désignant le couple effectif $(T_E)$ en tant qu'entrée inconnue, **caractérisé en ce que,** pour ledit système dynamique, un observateur (UIO) comportant des matrices d'observateur N, L, G, E ou Z, T, K, H et comportant une entrée inconnue w est configuré, et l'observateur (UIO) reçoit au moins un signal de mesure bruité du vecteur d'entrée u et/ou du vecteur de sortie y et en détermine une estimation $\hat{x}$ du vecteur d'état x et une estimation $(\hat{T}_E)$ du couple effectif $(T_E)$ en tant qu'entrée inconnue w en concevant la matrice N ou Z, laquelle détermine la dynamique $\dot{e}$ de l'erreur d'observateur e = $\hat{x}$ - x en tant que différence entre le vecteur d'état x et le vecteur d'état estimé $\hat{x}$ selon $\dot{e}$ = Ne ou $\dot{e}$ = Ze, de telle sorte que les valeurs propres λ de ladite matrice N ou Z se situent dans une plage f2/5 > λ > 5·f1, f1 étant la fréquence de changement maximale attendue de l'au moins un signal de mesure et le bruit dans l'au moins un signal de mesure influençant la bande de fréquence supérieure à la fréquence f2.

2. Procédé selon la revendication 1, **caractérisé en ce que,** pour la stabilité de la dynamique de l'erreur d'observateur $(\dot{e})$, un critère de stabilité est utilisé, à partir duquel les matrices d'observateur N, L, G, E ou Z, T, K, H sont calculées.

3. Procédé selon la revendication 1 ou 2, **caractérisé en ce que** les valeurs propres complexes (λ) sont vues dans un système de coordonnées comportant un axe imaginaire en tant qu'ordonnée et un axe réel en tant qu'abscisse, et qu'un angle d'amortissement (β) indique l'angle entre l'axe imaginaire et une droite par une valeur propre (λ) et l'origine du système de coordonnées, et **en ce que** l'angle d'amortissement (β) pour la valeur propre la plus proche de l'axe imaginaire se situe dans la plage de π/4 à 3·π/4.

4. Procédé selon l'une des revendications 1 à 3, **caractérisé en ce que** la valeur estimée du couple effectif $(\hat{T}_E)$ estimée par l'observateur (UIO) est envoyée à un filtre (F), lequel filtre en passe-bas le couple effectif $(\hat{T}_E)$ estimé dans un filtre passe-bas (LPF) comportant une fréquence limite prédéfinie supérieure à une fréquence fondamentale (ω), **en ce que,** dans au moins un filtre d'harmoniques auto-adaptatif (LPVHn), une composante d'oscillation harmonique (Hn) du couple effectif $(\hat{T}_E)$ estimé est déterminée comme n fois la fréquence fondamentale (ω) et l'au moins une composante d'oscillation harmonique (Hn) est ajoutée au couple $(\hat{T}_{EF})$ estimé filtré en passe-bas et la somme résultante du couple $(\hat{T}_E)$ estimé fourni par l'observateur (UIO) est soustraite et la différence résultante est utilisée en tant qu'entrée dans le filtre passe-bas (LPF), et **en ce que** la sortie du filtre passe-bas (LPF) est délivrée en tant que couple effectif $(\hat{T}_{EF})$ estimé filtré.

5. Procédé selon la revendication 4, **caractérisé en ce que** l'au moins un filtre d'harmoniques (LPVHn) est mis en œuvre en tant que système orthogonal qui utilise une composante d et une composante q de la valeur estimée du couple effectif $(T_E)$, la composante d étant en phase avec la valeur estimée $(\hat{T}_E)$ et la composante q étant déphasée de la composante d de 90°, **en ce qu'**une première fonction de transfert $(G_d)$ est placée entre l'entrée dans le filtre d'harmoniques (LPVHn) et la composante d et qu'une seconde fonction de transfert $(G_q)$ est placée entre l'entrée dans le filtre d'harmoniques (LPVHn) et la composante q, et **en ce que** des facteurs d'amplification $(k_d, k_q)$ des fonctions de transfert $(G_d, G_q)$ sont déterminés en tant que fonction de la fréquence harmonique $(\omega_n)$.

6. Procédé selon la revendication 5, **caractérisé en ce que** la composante d est utilisée en tant que composante d'oscillation harmonique (Hn).

7. Procédé selon la revendication 5 ou 6, **caractérisé en ce que** la valeur estimée du couple effectif $(\hat{T}_{EF})$ filtrée en passe-bas délivrée par le filtre passe-bas (LPF) est utilisée dans au moins un filtre d'harmoniques (LPVHn) afin d'en déterminer la fréquence fondamentale (ω) actuelle.

8. Procédé selon la revendication 5 ou 6, **caractérisé en ce que** l'observateur (UIO) traite un premier et un second signal de mesure et que la valeur estimée du couple effectif ($\hat{T}_E$) est filtrée avec un premier filtre (F1) et que le second signal de mesure est filtré avec un second filtre (F2) et que le second signal de mesure ($MS_F$) filtré en passe-bas délivré par le filtre passe-bas (LPF) du second filtre (F2) est utilisé dans au moins un filtre d'harmoniques (LPVHn) du premier filtre (F1) afin d'en déterminer la fréquence fondamentale ($\omega$) actuelle dans le premier filtre (F1).

9. Utilisation du couple effectif ($\hat{T}_E$) estimé avec un procédé selon l'une des revendications 1 à 8 dans un régulateur (R) pour réguler le générateur de couple (DE) et/ou le puits de couple (DS).

10. Utilisation selon la revendication 9, **caractérisée en ce que** les parties réelles des valeurs propres ($\lambda$) de l'observateur (UIO) sont inférieures aux parties réelles des valeurs propres ($\lambda_R$) du régulateur (R).

11. Banc d'essai permettant d'effectuer un essai pour un corps d'essai avec un générateur de couple (DE) qui est relié à un puits de couple (DS) par l'intermédiaire d'un élément d'accouplement (KE), et une unité de commande de banc d'essai (5) est prévue au niveau du banc d'essai (1), unité dans laquelle un régulateur (R) est mis en œuvre afin de réguler le générateur de couple (DE) ou le puits de couple (DS), et le régulateur (R) traite un couple effectif interne ($T_E$) du générateur de couple (DE), le corps d'essai étant modélisé en tant que système dynamique linéaire

$$\dot{x} = Ax + Bu + Fw$$

dans une représentation d'espace d'état sous la forme $y = Cx$ ou en tant que système dynamique

$$\dot{x} = Ax + Bu + Mf(x) + Fw$$

non linéaire dans une représentation d'espace d'état sous la forme $y = Cx$ , les matrices A, B, C, F, M étant des matrices de système résultantes d'un modèle du système dynamique contenant le couple effectif ($T_E$), M désignant l'amplification de la non-linéarité et u étant un vecteur d'entrée, y étant un vecteur de sortie et x étant un vecteur d'état du système dynamique et w désignant le couple effectif ($T_E$) en tant qu'entrée inconnue, **caractérisé en ce que,** dans l'unité de commande de banc d'essai (5), pour ledit système dynamique, un observateur (UIO) comportant des matrices d'observateur N, L, G, E ou Z, T, K, H et comportant l'entrée inconnue w est mis en œuvre, et un capteur de mesure est prévu sur le banc d'essai (1) et détecte au moins un signal de mesure bruité du vecteur d'entrée u et/ou du vecteur de sortie y et, à partir de celui-ci, l'observateur (UIO) estime une estimation ($\hat{x}$) du vecteur d'état x et une estimation $\hat{T}_E$ du couple effectif $T_E$ en tant qu'entrée inconnue w en concevant la matrice N ou Z, laquelle détermine la dynamique $\dot{e}$ de l'erreur d'observateur e = $\hat{x}$ - x en tant que différence entre le vecteur d'état x et le vecteur d'état estimé $\hat{x}$ selon $\dot{e}$ = Ne ou $\dot{e}$ = Ze, de sorte que les valeurs propres $\lambda$ de ladite matrice N ou Z se situent dans une plage f2/5 > $\lambda$ > 5·f1, f1 étant la fréquence de changement maximale attendue de l'au moins un signal de mesure et le bruit dans l'au moins un signal de mesure influençant la bande de fréquence supérieure à la fréquence f2.

Fig. 1

Fig. 2

Fig. 3

Fig. 4

Fig. 5

LPVHn

Fig. 6

Fig. 7

EP 3 732 456 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5771482 A

- US 6866024 B2


**In der Beschreibung aufgeführte Nicht-Patentliteratur**

- **S. JAKUBEK et al.** Schätzung des inneren Drehmoments von Verbrennungsmotoren durch parametrische Kalmanfilterung. *Automatisierungstechnik,* 2009, vol. 57 (8), 395-402
- **JING NA et al.** Vehicle Engine Torque Estimation via Unknown Input Observer and Adaptive Parameter Estimation. *IEEE Transactions on Vehicular Technology,* 14. August 2017, vol. PP (99

- Full-order observers for linear systems with unknown inputs. **MOHAMED DAROUACH et al.** IEEE Transactions on Automatic Control. Institute of Electrical and Electronics Engineers, 1994, vol. 39, 606-609